# NEUE EUROPÄISCHE PATENTSCHRIFT

(11) **EP 0 503 450 B2**
(45) Veröffentlichungstag und Bekanntmachung des Hinweises auf die Entscheidung über den Einspruch: **14.10.1998**
(45) Hinweis auf die Patenterteilung: 07.02.1996
(21) Anmeldenummer: 92103660.4
(22) Anmeldetag: 04.03.1992
(51) Int. Cl.: C04B 11/26

(54) **Trockene pulverförmige Putzmischung**
Dry powdery plaster composition
Composition d'enduit, sèche et pulvérulente

(30) Priorität: 08.03.1991 DE 4107385
(43) Veröffentlichungstag der Anmeldung: 16.09.1992
(73) Patentinhaber: Gebr. Knauf Westdeutsche Gipswerke KG, D-97343 Iphofen (DE)
(72) Erfinder: Limmer, Bärbel, W-8500 Nürnberg (DE); Ruf, Heinz, Dr., W-8717 Mainbernheim (DE); Hüller, Rolf, Dr., W-8712 Volkach (DE); Wirsching, Franz, Dr., W-8715 Iphofen (DE)
(74) Vertreter: Werner, Hans-Karsten, Dr.Dipl.-Chem.

(56) Entgegenhaltungen:
- EP-A- 0 344 430
- DE-A- 3 127 436
- DE-C- 3 048 506
- FR-A- 2 377 359
- FR-A- 2 423 463
- US-A- 4 502 901

## Beschreibung

Gegenstand der Vorliegenden Erfindung ist eine trockene pulverförmige Putzmischung unter Verwendung von calciniertem Rauchgasgips enthaltend übliche Hilfs- und Zusatzstoffe.

Es ist bekannt, daß Rauchgasgipse im Anfallzustand calciniert für Putzmischungen nicht eingesetzt werden können, da sie wegen ihres thixotropen Fließverhaltens schlechte Verarbeitungseigenschaften ergeben. Um Rauchgasgipse für Putzmischungen brauchbar Zu machen, wurde daher der Rauchgasgips stückig gemacht und anschließend zu gröberkörnigen Gemischen vermahlen, wobei meist obere Korngrößen von etwa 1 mm angestrebt wurden. Derartige Verwendungen von Rauchgasgipsen für Putzmischungen sind beispielsweise beschrieben in der DE-OS 28 26 769 und der DE-OS 30 48 506.

Die EP-A-0 344 430 beschreibt ein Verfahren zur Herstellung eines für die Produktion von Gipskartonplatten geeigneten Stuckgipses durch Feinstmahlung von calciniertem Rauchgasgips.

Eine Feinstmahlung von calciniertem Rauchgasgips beseitigt zwar das thixotrope Fließverhalten, führt jedoch zu einer erhöhten Klebrigkeit und rheologischen Eigenschaften, die für Putzmischungen, und zwar sowohl Handputzmischungen als auch Maschinenputzmischungen, nicht akzeptabel sind; vergl. hierzu Zement-Kalk-Gips, Jahrgang 36 (1983), Heft 5, Seiten 271 bis 274, "Die Probleme des Rauchgasgipses", wo im Abschnitt 4. Rauchgasgips und Naturrohgips miteinander verglichen werden. Zur Herstellung von Putzmischungen ist somit in der Vergangenheit stets der Weg der Kornvergrößerung beschritten worden, um die Produkte möglichst gut an den Naturgips und seine Eigenschaften heranzuführen. Für gute Verarbeitungseigenschaften bei Putzmischungen ist ein bestimmtes Kornband des Bindemittels mit Anteilen über 0,2 mm nötig.

Die Erfindung hat sich die Aufgabe gestellt, trockene pulverförmige Putzmischungen unter Verwendung von calciniertem Rauchgasgips herzustellen, wobei diese Putzmischungen mindestens gleiche, wenn nicht bessere Verarbeitungseigenschaften aufweisen sollen als bisher bekannte Putzmischungen und dabei mit geringem Aufwand herstellbar sein sollen.

Diese Aufgabe kann überraschend einfach dadurch gelöst werden, daß die Putzmischung 30 bis 95 Gew.-% feinstgemahlenen calcinierten Rauchgasgips gemäß Anspruch 1 enthält, welcher einen mittleren Korndurchmesser X_{50.3} von 10 bis 30 µm aufweist, wobei der 80%-Rückstand bei 2,0 bis 8 µm, vorzugsweise bei 2,5 bis 4 µm, der 20%-Rückstand bei kleiner als 60 µm liegt und der Blainewert mindestens 5000 cm²/g beträgt.

Es handelt sich somit um Rauchgasgips mit höherer Feinheit als sie sich beim natürlichen Zerfall des feinteilig gebrannten Rauchgasgipses im Wasser einstellt.

Zu den üblichen Hilfs- und Zusatzstoffen zählen die üblichen Zuschlagstoffe, wie Kalkstein, Leichtzuschlagstoffe, wie Perlite, Cellulosederivate, Stärkeäther, anorganische und organische Fasern usw., wie sie aus der umfangreichen Fach- und Patentliteratur über Putzmischungen bekannt sind. Ein wichtiger Bestandteil dieser Hilfs- und Zusatzstoffe sollte dabei so grobkörnig sein, daß zumindest eine gewisse Kornfraktion über 0,2 mm vorliegt. Erstaunlicherweise kann jedoch dieser Anteil der Kornfraktion in der Putzmischung erfindungsgemäß deutlich gesenkt werden. Die Zugabe eines grobkörnigen Zuschlagstoffes kann teilweise auch schon vor der Mahlung erfolgen.

Weiterhin ist es erfindungsgemäß möglich, den Putzmischungen einen erheblichen Anteil an unvermahlenem calcinierten Rauchgasgips zuzusetzen und dennoch gute Eigenschaften der Putzmischung zu erhalten. In solchen Fällen sollten dennoch mindestens 30 Gew.-% des calcinierten Rauchgasgipses feinstgemahlen vorliegen. Bei Zusatz von Leichfzuschlagstoffen, wie Perlite, welche volumenmäßig erheblich zur Grobkornfraktion beitragen, ist es hingegen möglich, bis zu 95 Gew.-% feinstgemahlenen calcinierten Rauchgasgips beizumischen.

Nach dem Stand der Technik wird Putzmischungen überwiegend kompaktierter, zum Anhydrit II gebrannter und vermahlener Rauchgasgips zugesetzt gemäß DE-PS 28 26 769. Gemäß DE-PS 30 48 506 wird hingegen der Rauchgasgips als β-Halbhydrat kompaktiert und erneut grob vermahlen. Erfindungsgemäß ist es möglich, den Rauchgasgips im ursprünglichen Anfallzustand bis zum β-Halbhydrat oder Anhydrit II oder Phasengemischen, wie Stuckgips, oder Putzgips zu calcinieren und anschließend feinstzuvermahlen. Es ist somit möglich, je nach den technischen Gegebenheiten der Produktionsstätte und den angestrebten Verarbeitungseigenschaften jeweils eine oder zwei Komponenten der Putzmischungen aus Rauchgasgips herzustellen, wobei nur darauf geachtet werden muß, daß noch eine gewisse Menge an gröberkörnigen Zuschlagstoffen vorhanden ist. Diese können aber beispielsweise auch durch entsprechend grob vermahlenen Kalkstein oder gröberkörnige Leichtzuschlagstoffe, wie geblähte Perlite, geliefert werden. Natürlich kann die Putzmischung auch die üblichen Stellmittel wie Verzögerer, Beschleuniger, Kalkhydrat etc. enthalten.

Von entscheidender Bedeutung für die Qualität der erfindungsgemäßen Putzmischungen sind die oben genannten Parameter, nämlich mittlerer Korndurchmesser, 80%-Rückstand, 20%-Rückstand und der Blainewert. Wird der Rauchgasgips noch feiner vermahlen, werden die Putzmischungen zu klebrig und können dann nicht mehr einwandfrei verarbeitet werden. Wird hingegen nicht fein genug vermahlen, bleiben die Putzmischungen zu thixotrop und deshalb ebenfalls nicht einwandfrei verarbeitbar. Es handelt sich somit uni einen relativ engen und speziellen Bereich der Feinstvermahlung, der zu den gewünschten guten Eigenschaften führt.

Dieser Grad der Feinstvermahlung kann beispielsweise in Kugelmühlen, Stiftmühlen oder Feinprallmühlen durchgeführt werden Mit den für die Mahlung von grobstückigem Kalkstein üblicherweise verwendeten Schlagkreuzmühlen oder Hammermühlen sind die geforderten Feinstmahlgrade kaum zu erreichen. Als besonders geeignet erwiesen hat sich die Feinstmahlung in Kugelmühlen mit sehr hohen Durchsatzraten, wobei der dabei anfallende Mühlenstaub direkt in das Fertiggut zugeführt werden kann.

Die erfindungsgemäßen Pufzmischungen können bezüglich ihrer Eigenschaften in breiter Weise variiert werden und auf den jeweiligen speziellen Verwendungszweck eingestellt werden. Der wesentliche Vorteil dieser Putzmischungen besteht vor allem darin, daß es energetisch und kostenmäßig wesentlich günstiger ist, Rauchgasgips im Anfallzustand zu calcinieren und dann feinstzuvermahlen, anstatt ihn vorher zu kompaktieren und dann eine Grobvermahlung durchzuführen. Es ist das Verdienst der vorliegenden Erfindung, festgestellt zu haben, daß ein derartig aufbereiteter Rauchgasgips zur Herstellung von hervorragend verarbeitbaren Putzmischungen verwendet werden kann und dabei Energie und Kosten eingespart werden können.

Gegenstand der vorliegenden Erfindung sind somit nicht nur die oben genannten Putzmischungen, sondern auch die Verwendung von feinstgemahlenem calcinierten Rauchgasgips, welcher einen mittleren Korndurchmesser X_{50,3} von 10 bis 30 µm aufweist, wobei der 80%-Rückstand bei 2,0 bis 8 µm, vorzugsweise bei 2,5 bis 4 µm, der 20%-Rückstand bei kleiner als 60 µm liegt und der Blainewert mindestens 5000 cm²/g beträgt zur Herstellung von Putzmischungen enthaltend 30 bis 95 gew% calcinierten Rauchgasgips gemäß Anspruch 4 Putzmischungen und beispielsweise Fertigputz, Haftputz und Maschinenputz

In den nachfolgenden Beispielen sind einige gut geeignete Rezepturen zusammengestellt sowie Vergleiche mit herkömmlichen Putzmischungen.

### BEISPIEL 1 und VERGLEICHSBEISPIEL 1

Es handelt sich um Putzgipsmischungen mit nur einer Gipskomponente. Für beide Beispiele gilt folgende Grundrezeptur.

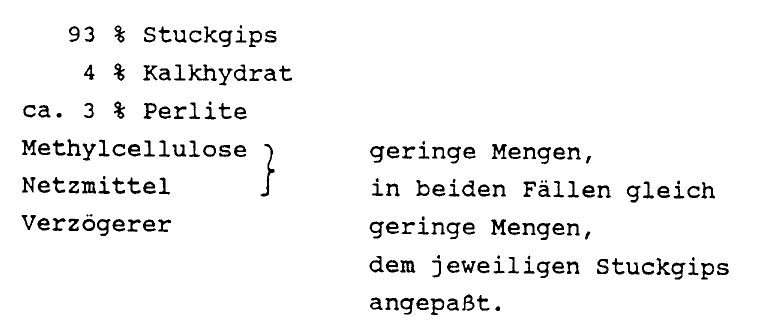

| | Beispeil 1 (erfindungsgemäße Putzmischung) | Vergleichsbeispiel 1 (Handelsprodukt) |
|---|---|---|
| Stuckgips | im Anfallzustand calcinierter Rauchgasgips feinstgemahlen | kompaktierter grobvermahlener Rauchgasgips |

| Baustelleneigenschaften bei Verarbeitung auf einer Betondecke | | |
|---|---|---|
| Auftragen | sehr gut | sehr gut |
| Verteilen | sehr leicht | sehr leicht |
| Zuziehen | läßt sich leicht und gut abziehen | läßt sich gut abziehen |
| Filzen | gut, genügend Schmand | gut, genügend Schmand |
| 1. Glätten | sehr gut | sehr gut |
| 2. Glätten | sehr gut, Oberfläche wirkt geschlossener als beim Handelsprodukt | sehr gut |

| Technologische Kennwerte (Labor) | | |
|---|---|---|
| Wasser-/Gipsfaktor | 0,73 | 0,73 |
| Ergiebigkeit (1/100 kg Tr.m) | 137 | 138 |
| Wasserabgabe nach 20 min (g) | 1,27 | 1,31 |

| Festigkeiten (MN/m²) | | |
|---|---|---|
| Biegezug | 1,2 | 1,3 |
| Druck | 2,9 | 2,8 |
| Härte | 6,4 | 6,8 |

### BEISPIEL 2 und VERGLEICHSBEISPIEL 2

Es handelt sich um Putzgipsmischungen mit zwei Gipskomponenten. Die Kleinkomponenten (Stellmittel) wurden bei beiden Mischungen gleich gehalten und nur der Verzögerer angepaßt. Als Zuschlagstoff enthalten beide Beispiele einen grobkörnigen Kalksteingrieß.

| | Beispiel 2 (erfindungsgemäß) | Vergleichsbeispiel 2 (Handelsprodukt) |
|---|---|---|
| Stuckgips | im Anfallzustand calcinierter Rauchgasgips feinstgemahlen | kompaktierter grobvermahlener Rauchgasgips |
| Estrichgips | im Anfallzustand calcinierter Rauchgasgips ungemahlen | kompaktierter grobvermahlener Rauchgasgips |
| Mengenanteil Gips (%) | 70 | 88 |
| Mengenanteil Kalksteingrieß (%) | 28 | 10 |

| Korngrößenverteilung | | |
|---|---|---|
| Rückstand | | |
| 0,5 mm (%) | 9,3 | 12,3 |
| 0,063 mm (%) | 32,0 | 41,8 |

| Baustelleneigenschaften bei maschineller Verarbeitung | | |
|---|---|---|
| Anspritzen | gut | gut |
| Maschineneinstellung | 600 1/12 bar | 660 1/12 bar |
| Verteilen | sehr gut, sehr leicht | sehr gut |
| Ausziehen | gut | gut |
| Filzen | gut | gut |
| 1. Glätten | gut, leicht | gut |
| 2. Glätten | sehr gut, besser als Handelsprodukt | sehr gut |
| Beurteilung der Oberfläche | sehr glatt | gut, glatt |
| Baustellen-Ergiebigkeit (1/100 kg Tr.m) | 103 | 99 |

### BEISPIEL 3

Es handelt sich um eine Putzgipsmischung wie im Beispiel 1 mit nur einer Gipskomponente. Sie enthält

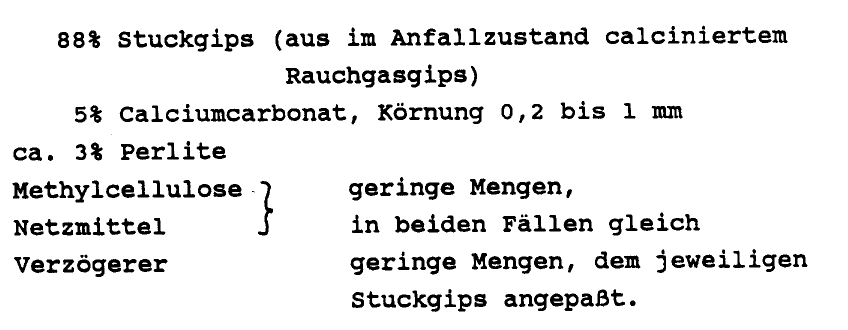

Die Komponenten wurden wie in Beispiel 1 feinstvermahlen.

| Baustelleneigenschaften bei Verarbeitung auf einer Betondecke | |
|---|---|
| Auftragen | sehr gut |
| Verteilen | sehr leicht |
| Zuziehen | läßt sich leicht und gut abziehen |
| Filzen | sehr gut |
| 1. Glätten | sehr gut |
| 2. Glätten | sehr gut, Oberfläche sehr glatt, wirkt geschlossener als beim Handelsprodukt |

| Technologische Kennwerte (Labor) | |
|---|---|
| Wasser/Gipsfaktor | 0,71 |
| Ergiebigkeit (1/100kg Tr.m.) | 134 |
| Wasserabgabe nach 20 min. (g) | 1,15 |

| Festigkeiten (MN/m²) | |
|---|---|
| Biegezug | 1,0 |
| Druck | 2,6 |
| Härte | 5,8 |

## Patentansprüche

1. Trockene pulverförmige Putzmischung unter Verwendung von calciniertem Rauchgasgips, enthaltend übliche Hilfs- und Zusatzstoffe, von denen zumindest eine gewisse Kornfraktion über 0,2 mm vorliegt, dadurch gekennzeichnet, daß die Mischung 30 bis 95 Gew.-% feinstgemahlenen calcinierten Rauchgasgips enthält, welcher einen mittleren Korndurchmesser X_{50,3} von 10 bis 30 µm aufweist, wobei der 80%-Rückstand bei 2,0 bis 8 µm, vorzugsweise bei 2,5 bis 4 µm, der 20%-Rückstand bei kleiner als 60 µm liegt und der Blainewert mindestens 5000 cm²/g beträgt und der Rauchgasgips im ursprünglichen Anfallzustand bis zum β-Halbhydrat oder Anhydrit II oder Phasengemischen, in Form von Stuckgips, oder Putzgips, calciniert wurde.

2. Putzmischung gemäß Anspruch 1, dadurch gekennzeichnet, daß sie zusätzlich unvermahlenen calcinierten Rauchgasgips enthält.

3. Putzmischung gemäß einem der Ansprüche 1 bis oder 2, dadurch gekennzeichnet, daß die Feinstmahlung in Kugelmühlen, Stiftmühlen oder Feinprallmühlen durchgeführt wurde.

4. Verwendung von feinstgemahlenem calcinierten Rauchgasgips, welcher einen mittleren Korndurchmesser X_{50,3} von 10 bis 30 µm aufweist, wobei der 80%-Rückstand bei 2,0 bis 8 µm, vorzugsweise bei 2,5 bis 4 µm, der 20%-Rückstand bei kleiner als 60 µm liegt und der Blainewert mindestens 5000 cm²/g beträgt im Gemisch mit einer gewissen Kornfraktion über 0,2 mm zur Herstellung von Putzmischungen gemäß Anspruch 1.

## Claims

1. A dry, powdery plastering composition comprising calcined flue gas gypsum which contains usual auxiliary agents and additives of which at least some grain size fraction of above 0.2 mm is present, characterized in that said composition contains from 30 to 95% by weight of pulverized calcined flue gas gypsum having a mean grain diameter X_{50.3} of from 10 to 30 µm wherein the 80% residue is from 2.0 to 8 µm, preferably from 2.5 to 4 µm, the 20% residue is less than 60 µm, and the Blaine value is at least 5000 cm²/g, and said flue gas gypsum, in the state as originally obtained, has been calcined to yield the β-semihydrate, or anhydrite II, or phase mixtures in the form of stucco (sculptor's plaster) or plaster of Paris, i.e., plaster for plastering or facing.

2. The plastering composition according to claim 1, characterized by additionally containing unmilled calcined flue gas gypsum.

3. The plastering composition according to any of claims 1 or 2, characterized in that said pulverization has been performed in ball mills, pinned disk mills, or impact mills.

4. The use of pulverized calcined flue gas gypsum having a mean grain diameter X_{50.3} of from 10 to 30 µm wherein the 80% residue is from 2.0 to 8 µm, preferably from 2.5 to 4 µm, the 20% residue is less than 60 µm, and the Blaine value is at least 5000 cm²/g, in admixture with some grain size fraction of above 0.2 mm, for the preparation of plastering compositions according to claim 1.

## Revendications

1. Composition d'enduit, sèche et pulvérulente, qu'on obtient en utilisant du gypse de gaz de fumée calciné, contenant des adjuvants et additifs usuels, dont au moins une fraction granulométrique définie est supérieure à 0,2 mm, caractérisée en ce qu'elle contient de 30 à 95 % en poids de gypse de gaz de fumée calciné, et finement broyé dont les grains ont un diamètre moyen, X_{50,3}, de 10 à 30 µm, le refus à 80% étant à 2,0 à 8 µm, de préférence de 2,5 à 4 µm, le refus à 20 % étant au-dessous de 60 µm, et la valeur Blaine étant d'au moins 5000 cm²/g et en ce que le gypse de gaz de fumée à l'état originel a été calciné jusqu'à l'obtention de semi-hydrate β ou d'anhydrite II ou de phases mixtes, sous la forme de plâtre de moulage ou de plâtre d'enduit.

2. Composition d'enduit selon la revendication 1, caractérisée en ce qu'elle contient, en outre, du gypse de gaz de fumée calciné, non broyé.

3. Composition d'enduit selon l'une des revendications 1 ou 2, caractérisée en ce qu'on effectue le broyage fin dans des broyeurs à boulets, des broyeurs Carr ou des broyeurs fins à impact.

4. Utilisation de gypse de gaz de fumée calciné, finement broyé, dont les grains ont un diamètre moyen, X_{50,3}, de 10 à 30 µm, le refus à 80 % étant à 2,0 à 8 µm, de préférence 2,5 à 4 µm, le refus à 20 % étant au-dessous de 60 µm, et la valeur Blaine étant d'au moins 5000 cm²/g, mélangé avec une fraction granulométrique définie supérieure à 0,2 mm, pour l'obtention de compositions d'enduit selon la revendication 1.
